# EUROPÄISCHE PATENTANMELDUNG

(11) **EP 3 985 377 A1**
(43) Veröffentlichungstag der Anmeldung: **20.04.2022**
(21) Anmeldenummer: 20202126.7
(22) Anmeldetag: 15.10.2020
(51) Int. Cl.: G01M 13/045, G01M 13/028

(54) **VERFAHREN ZUR FEHLERERKENNUNG BEI EINEM ANTRIEB**

(71) Anmelder: Siemens Aktiengesellschaft, 80333 München (DE)
(72) Erfinder: Shet, Rohan Mangalore, 91056 Erlangen (DE)

(57) **Zusammenfassung**

Die Erfindung betrifft ein Verfahren zur Fehlererkennung bei einem Antrieb (1), wobei ein normiertes Geschwindigkeitsspektrum (8) ermittelt wird, wobei ein erster Spitzenwert erkannt wird und wobei ein erstes Muster erkannt wird.

## Beschreibung

Die Erfindung betrifft ein Verfahren zur Fehlererkennung bei einem Antrieb.

Ein Antrieb weist beispielsweise eine elektrische Maschine, ein Getriebe, einen Keilriemen, einen Stromrichter, etc. auf. Der Antrieb weist beispielsweise auch ein oder mehrere Lager auf. Das Lager bzw. die Lager sind insbesondere Teil der elektrischen Maschine des Getriebes, etc. Die elektrische Maschine ist beispielsweise ein Hochspannungs-Elektromotor. Derartige Motoren werden zum Beispiel in vielen Fertigungsindustrien eingesetzt. Eine rechtzeitige Wartung dieser Maschinen ist ein Schlüsselaspekt, um dem Kunden derartige Anlagen einen ununterbrochenen Betrieb bzw. Service zu bieten. Ein Ziel kann dabei sein zum Beispiel eine frühzeitige Vorhersage von mechanischen Fehlern in den beweglichen Elementen eines Elektromotors zu erkennen und die Möglichkeit zu bieten, den Betreiber einer Anlage bzw. eines Motors bzw. ein Kundendienstteam rechtzeitig zu alarmieren, um eine ungeplante Ausfallzeit der Maschine bzw. der Anlage zu vermeiden.

Aus der EP1304463B1 ist beispielsweise ein Verfahren zur Überwachung des Zustandes eines Lagers bekannt, das an einem Ende einer drehbaren Welle angeordnet ist, wobei ein das Lager überwachender Vibrationssensor an dem anderen Ende der drehbaren Welle, jedoch in der Nähe derselben angeordnet ist. Bei dem Verfahren wird ein Breitbandsignal durch den Vibrationssensor ermittelt, mittels dessen das Lager auf einen Defekt überwacht wird.

Aus der US7231303B2 ist ein Schwingungssensor zur Überwachung des Zustands einer rotierenden Komponente bekannt. Eine hierfür vorhandene Auswertungselektronik hat einen Analog-Digital-Wandler und eine Signalaufbereitungsvorrichtung mit einer Vielzahl von Signalen, die durch das Sensorelement erfasst wurden, und so diagnostizierbar sind.

Aus der US5895857A ist eine Signalverarbeitungseinrichtung zur Verarbeitung von Maschinenschwingungen bekannt. Hier ist ein Spitzenwertdetektor zur Bestimmung von Spitzen der Vibrationsamplitude während vorbestimmter Stichprobenzeiträume verwendet.

Die Eine Aufgabe der Erfindung ist es die Fehlererkennung bei einem Antrieb zu verbessern.

Eine Lösung der Aufgabe ergibt sich nach einem Verfahren gemäß Anspruch 1. Ausgestaltungen ergeben sich beispielsweise gemäß der Ansprüche 2 bis 7. Darüber hinaus ergibt sich eine Lösung der Aufgabe durch ein Computerprogrammprodukt nach Anspruch 8. Die in Bezug auf das Verfahren nachstehend angeführten Vorteile und Ausgestaltungen lassen sich sinngemäß auf das Computerprogramm und das Computerprogrammprodukt übertragen.

Bei einem Verfahren zur Fehlererkennung bei einem Antrieb wird ein normiertes Geschwindigkeitsspektrum ermittelt, wobei ein erster Spitzenwert erkannt wird und wobei ein erstes Muster erkannt wird. Die Geschwindigkeit ist beispielsweise eine Drehzahl. Durch das Erkennen des Spitzenwertes bzw. des Musters im normierten Geschwindigkeitsspektrum können Fehler erkannt werden. Dabei wird ein Spitzenwert erkannt bzw. ein Muster erkannt, das vom Normalbetrieb abweicht. Die Abweichung kann sich durch einen Fehler ergeben. So kann beispielsweise auch ein Fehler bei einem Antriebsriemen, wie ein Riemenversatz, erkannt werden.

In einer Ausgestaltung des Verfahrens wird ein normiertes Beschleunigungshüllkurvenspektrum ermittelt, wobei ein zweiter Spitzenwert erkannt wird und wobei auch ein zweites Muster erkannt wird. So kann beispielsweise ein Lagerfehler und/oder ein Fehler eines Getriebes, bzw. eines Getriebeelementes, erkannt werden.

In einer Ausgestaltung des Verfahrens wird eine Schwingungsanalyse im Frequenzbereich anhand des normierten Geschwindigkeitsspektrums durchgeführt. So können beispielsweise Fehler erkannt werden, die eine Maschine zugehörig sind, wie z.B. ein Ausrichtungsfehler oder eine Lockerung eine Befestigung der Maschine.

In einer Ausgestaltung des Verfahrens wird eine Schwingungsanalyse im Frequenzbereich anhand eines Spektrums der normierten Beschleunigungshüllkurve durchgeführt. Die Schwingungsanalyse im Frequenzbereich wird insbesondere auf der Grundlage von Expertenwissen (mit Hilfe von Lagerinformationen) anhand von Spektren der normierten Beschleunigungshüllkurve durchgeführt wird, um Fehler zu erkennen, die zu einem Lagerelement gehören.

In einer Ausgestaltung des Verfahrens wird eine statistische Inferenz auf eine Zeitbereichsstatistik wie Skewness und Kurtosis angewandt. So ist es möglich ein abnormales Verhalten im Schwingungssignal zu erkennen.

In einer Ausgestaltung des Verfahrens wird zum Erkennen eines Musters eine künstliche Intelligenz verwendet. Eine derartige künstliche Intelligenz ist insbesondere trainierbar. Zum Training könne Informationen über den Antrieb, wie zum Beispiel Nennleistung, Spitzenleistung, Nenndrehzahl, maximale Drehzahl, etc. mit verwendet werden.

In einer Ausgestaltung des Verfahrens wird zur Fehlererkennung ein Betriebszustand des Antriebs verwendet. So kann beispielsweise unterschieden werden ob Vibrationen im Stillstand, während einer Beschleunigungsphase oder nur bei hohen Drehzahlen auftreten. Abhängig von diesen Betriebszuständen kann dann ein Frequenzspektrum analysiert werden.

In einer Ausgestaltung des Verfahrens wird die Schwingungsanalyse an den Schwingungsdaten durchgeführt, die von Schwingungssensoren erfasst werden, die auf der Antriebsseite und auf der Bedienseite der Maschine montiert sind. Die Sensoren können z.B. in verschiedenen Ausrichtungen in Bezug auf die Drehachse des Motors montiert werden: Axial, vertikal oder horizontal. Beispielsweise kann die Vibrationsanalyse zusätzlich auf einer einfachen Schwellenwertbildung von KPIs im Zeitbereich basieren, wie z.B. RMS-Wert, Scheitelfaktor, Spitze-Spitze, Kurtosis und Skewness / Schiefe. Auch ist es beispielsweise möglich die Schwingungsanalyse auf einer Spektralanalyse zu basieren, wobei das Schwingungssignal im Zeitbereich in den Frequenzbereich transformiert und analysiert wird. So können beispielsweise vordefinierte Bereiche der Spektren überwacht werden, die zu Lagerfehlern gehören, und wenn die Spektralspitzen dieses Bereichs über dem eingestellten Schwellenwert liegen, ein Fehler erkannt und gemeldet werden. Schlüsselinformationen der Spektralbereiche, die zu Wälzlagerfehlern gehören, sind beispielsweise aus Wälzlagerdatenblättern entnehmbar.

In einer Ausgestaltung des Verfahrens empfängt ein Schwingungsanalyse-Tools Schwingungsdaten. Derartige Schwingungsdaten können in dem Tool durch Berechnungen ausgewertet werden. Das Schwingungsanalyse-Tool ist beispielsweise am Ort der überwachten Maschine oder von diesem Ort beabstandet, so dass hierfür benötigte Daten beispielsweise über das Internet zum Schwingungsanalyse-Tool übertragen werden. Die Berechnung betrifft beispielsweise Schwingungsspektren im Frequenzbereich, Schwingungsstatistiken im Zeitbereich und/oder Betriebszustände der überwachten Maschine.

In einer Ausgestaltung des Verfahrens erfolgt also zumindest eine der folgenden Berechnungen bzw. Analysen:
- Schwingungsspektren im Frequenzbereich (Geschwindigkeits- und Beschleunigungshüllkurvenspektren),
- Zeitbereichsstatistiken wie Erwartungswert, Varianz, Skewness und/oder Kurtosis,
- Betriebszustände der Maschine, welche insbesondere auf der Grundlage von Drehzahl und Drehmoment der Maschine zu einem gegebenen Zeitpunkt definiert sind.

In einer Ausgestaltung des Verfahrens werden in einer Datenbank wichtige Asset-Informationen wie Lagertyp, Anwendungsdetails, wie z.B. Zahnradgetriebe, Riemengetriebe, gespeichert und bei der Analyse der gemessenen Istwerte wie eine Geschwindigkeit oder eine Vibration verwendet. So kann eine Motorschadenerkennung diese Daten zur Erkennung von Fehlern verwenden, die zum Beispiel zu verschiedenen beweglichen Elementen der elektrischen Maschine gehören, wie z.B. Lagerelemente, Riemen oder Getriebe.

In einer Ausgestaltung des Verfahrens werden Spektren erfasster Daten bzw. Istwerte in Bezug auf Amplitude und Drehzahl normiert (normalisiert), um amplitudennormierte Ordnungsspektren zu erhalten. So kann ein Algorithmus zur Normierung robust gegenüber unterschiedlichen Betriebszuständen gemacht werden. Die Amplitudennormierung basiert zum Beispiel auf einer spektralen z-Bewertung.

In einer Ausgestaltung des Verfahrens werden zumindest zwei der nachfolgend aufgeführten Schritte parallel angewendet, da sie unabhängig voneinander sind:
a) Durchführung einer auf Expertenwissen basierenden Schwingungsanalyse im Frequenzbereich anhand von normierten Geschwindigkeitsspektren, um Fehler zu erkennen, die zur Maschine gehören, wie z.B. Ausrichtungsfehler, Lockerung,
b) Durchführung einer Schwingungsanalyse im Frequenzbereich auf der Grundlage von Expertenwissen (mit Hilfe von Lagerinformationen) anhand von Spektren der normierten Beschleunigungshüllkurve, um Fehler zu erkennen, die zum Lagerelement gehören
c) Durchführung einer statistischen Inferenz basierend auf Zeitbereichsstatistiken wie Schiefe und Wölbung, um abnormales Verhalten im Schwingungssignal zu erkennen.
d) Anwendung eines Spitzen- und Mustererkennungsmoduls auf normierte Geschwindigkeitsspektren, um Fehler im Antriebsriemen wie Riemenversatz zu erkennen,
e) Anwendung des Peak- und Mustererkennungsmoduls auf normierte Beschleunigungshüllkurvenspektren, um Fehler in Lagerfehlern oder im Getriebeelement zu erkennen.

Die Schritte [a-c] sind Schritte zur Erkennung von Lagerfehlern in einer Maschine mittels Schwingungsanalyse. Das eingesetzte Peak- und Mustererkennungsmodul zur Erkennung von Spitzenwerten und Mustern ist nicht nur robust gegenüber Abweichungen in den Lagerinformationen, sondern bietet auch die Möglichkeit, bei Fehlen von Lagerinformationen Lagerdefekte zu erkennen. Das Peak- und Mustererkennungsmoduls ermöglicht auch die Erkennung von Nichtlagerfehlern wie ein Riemenschieflauf und/oder ein defektes Getriebe.

In einer Ausgestaltung des Verfahrens verwendet das Modul zur Erkennung von Spitzenwerten und Mustern das Schwingungsspektrum als Eingangssignal. Es wendet insbesondere einen Schwellenwert auf das Spektrum an und entfernt kleinere, weniger prominente Peaks, da diese Peaks keine Informationen über die Fehler enthalten.

In einer Ausgestaltung des Verfahrens wird in einem Schritt bewertet, ob einer der markanten Peaks ganzzahlige mehrfache Harmonische enthält. Dies wird insbesondere mit allen Peaks gemacht. Es werden Peaks herausgebildet, die keine Harmonischen enthalten oder wenn der Peak bereits eine Harmonische eines auffälligen Peaks geringerer Ordnung ist. So erhält man Peaks mit Harmonischen. Peaks mit harmonischen können ein Hinweis auf einen Fehler sein. Sobald diese Peaks ermittelt sind, kann ein Fehlertyp eingegrenzt werden, indem die spektralen Muster um diese Peaks und ihre Harmonischen ausgewertet werden.

In einer Ausgestaltung des Verfahrens werden die Ergebnisse aus [a - e] mit Hilfe von Expertenwissen bzw. einer künstlichen Intelligenz analysiert, um Schlussfolgerungen über einen möglichen Defekt und dessen Schwere zu ziehen.

In einer Ausgestaltung des Verfahrens wird beispielsweise eine Motorschadenerkennung rechtzeitig ausgelöst, wenn alle oben genannten Schritte in Abschnitt [a-e] durchgeführt werden. Die Ausgabe kann eine visuelle Grafik für einen Bediener sein. Auch ist es beispielsweise möglich einen ausgearbeiteten Bericht mit Detailgrafik und historischer Analyse zu generieren.

In einer Ausgestaltung des Verfahrens kann bei einer Automatisierten Schwingungsanalyse im Frequenzbereich auf Lagerinformationen für ihre Funktionalität verzichtet werden. So ist die Analyse nicht mehr abhängig von der Kenntnis genauer Lagerfehlerfrequenzen. In vielen Fällen sind die Lagerinformationen ungenau oder nicht verfügbar, was zu einer schlechten Leistung oder einem vollständigen Ausfall bei der Erkennung fehlerhafter Lagerelemente führen hätte können. Im Gegensatz zu vielen Techniken des maschinellen Lernens für die Mustererkennung benötigt das beschriebene Verfahren keine große Menge an Trainingsdaten. Das beschriebene Verfahren bietet eine robuste Technik zur Überwindung der Abhängigkeit von Lagerinformationen.

Durch eines der beschriebenen Verfahren ist es beispielsweise möglich auch sehr alte Maschinen, für die die Lagerinformationen nicht verfügbar sind, zu überwachen. Mittels eines der beschriebenen Verfahren ist es möglich zuverlässige Informationen über den Gesundheitszustand der Anlage zu erhalten und/oder rechtzeitig über einen potenziellen Defekt zu informieren.

In einer Ausgestaltung des Verfahrens werden Istwerte oder davon abgeleitete Werte (z.B. Schwingungsdaten des Elektromotors) über das Internet übermittelt und eine Analyse der Daten mittels eine Cloud-Anwendung ermöglicht.

In einer Ausgestaltung des Verfahrens wird dieses auf skalierbaren Instanzen mittels einer Cloud-Anwendung, also webbasiert, in einer geeigneten Python-Umgebung bereitgestellt. Dies hat den Vorteil eine Prozessautomatisierung zu ermöglichen. Das Verfahren wird beispielsweise durch Algorithmen implementiert, die auf Expertenwissen und Pattern Mining basieren.

In einer Ausgestaltung des Verfahrens wird eine eine Kombination verschiedener Techniken verwendet. Dies sind insbesondere:
a) statistische Ableitung zeitbereichsbasierter KPIs von Schwingungsdaten,
b) Schwingungsanalyse im Frequenzbereich unter Verwendung einer vordefinierten spektralen Schwellenwertberechnung auf der Grundlage von Expertenwissen (Schwellenwertberechnung zur Definition eines fehlerhaften und nicht fehlerhaften Zustands) und Lagerinformationen,
c) Spektrale Schwellenwertbestimmung von Peakmustern, die aus der Erkennung von neuartigen Peak- und Mustererkennungen gewonnen wurden, was insbesondere auf der Grundlage von Expertenwissen entwickelt ist.

Eine endgültige Entscheidung basiert insbesondere auf den kombinierten Ergebnissen aus a,b und c.

In einer Ausgestaltung des Verfahrens stützt sich in Ermangelung von Lagerinformationen der Algorithmus auf (a,c), um eine Entscheidung zu treffen. Bei Vorliegen von Lagerinformationen verwendet der Algorithmus insbesondere (a,b,c), um eine Entscheidung zu treffen.

In einer Ausgestaltung des Verfahrens werden in einem Spektrum Hauptmaxima erkannt. Zu diesen erkannten Hauptmaxima werden Nebenmaxima erkannt, welche jeweils ein Seitenband eines Hauptmaximums darstellen. Aus dem Muster der Hauptmaxima und Nebenmaxima wird durch eine Analyseeinrichtung auf einen bestimmten Fehler geschlossen. Diese Analyseeinrichtung weist insbesondere eine künstliche Intelligenz auf.

Es ist ein Computerprogrammprodukt vorsehbar, das computerausführbare Programmmittel aufweist und bei Ausführung auf einer Rechnereinrichtung mit Prozessormitteln und Datenspeichermitteln geeignet ist, ein Verfahren nach einer der beschriebenen Art durchzuführen. So kann eine zugrundeliegende Aufgabenstellung durch ein Computerprogrammprodukt gelöst werden, das auch zu einem Simulieren eines Betriebsverhaltens dienen kann. Das Computerprogrammprodukt ist insbesondere zur Installation auf einer, einer Steuereinrichtung zugeordneten, Recheneinheit vorgesehen, wobei das Computerprogrammprodukt bei Ausführung auf der Recheneinheit zur Durchführung des beschriebenen Verfahrens ausgebildet ist.

Die Merkmale der einzelnen beanspruchten bzw. beschriebenen Gegenstände sind ohne Weiteres miteinander kombinierbar. Im Folgenden wird die Erfindung beispielhaft anhand von Figuren näher dargestellt und erläutert. Die in den Figuren gezeigten Merkmale können zu neuen Ausführungsformen kombiniert werden, ohne die Erfindung zu verlassen. Gleichartige Elemente bekommen das gleiche Bezugszeichen. Es zeigen
- FIG 1: eine elektrische Maschine mit einer Datenanalyse,
- FIG 2: einen ersten Fall mit einer Spektralanalyse,
- FIG 3: einen zweiten Fall mit einer Spektralanalyse und
- FIG 4: einen dritten Fall mit einer Spektralanalyse.

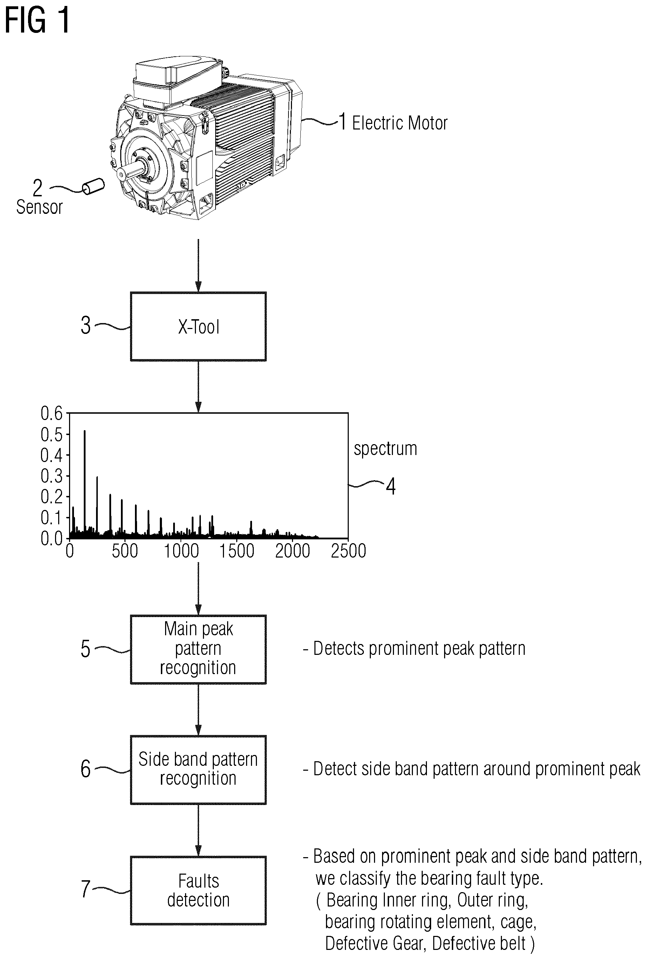

Die Darstellung nach Figur 1 zeigt einen elektrischen Motor 1 und einen Sensor 2 zur Aufnahme von Istwerten. Die Istwerte werden von einer Analyseeinrichtung 3 drei empfangen und es wird ein Spektrum 4 gebildet. In einem nachfolgenden Schritt 5 wird ein Muster von Hauptmaxima (also den wesentlichen Maxima) erkannt. In einem weiteren Schritt 6 werden Muster von Seitenbändern, die jeweils den Hauptmaxima zugehörig sind, erkannt. In einem weiteren Schritt werden auf Basis der vorhergehenden Schritte (Muster der Hauptmaxima und musste der Seitenbänder) Fehler erkannt. Derartige Fehler können nach Typen von Lagerfehlern klassifiziert werden. Derartige Typen sind beispielsweise: Lagerinnenring, Lageraußenring, rotierendes Element des Lagers, Käfig, fehlerhaftes Getriebe, fehlerhafter Treibriemen.

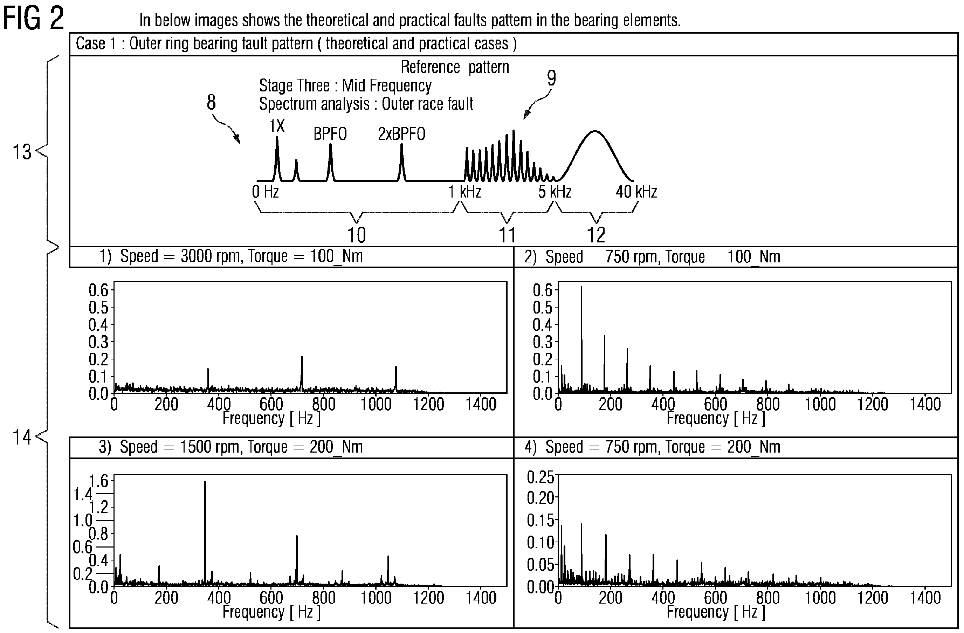

Die Darstellung nach Figur 2 zeigt einen ersten Fall mit einer Spektralanalyse. Figur 2 zeigt theoretisch und praktisch Fehlermuster bei einem Fehler eines Lageelementes. Gezeigt ist ein Spektrum in drei Bereichen 10, 11 und 12, wobei diese Bereiche eine theoretischen Darstellung 13 betreffen. Der Bereich 10 betrifft eine bestimmte Geschwindigkeit. Der Bereich 11 betrifft eine Beschleunigung. Der Bereich 12 betrifft hohe Frequenzen. Hieraus ergibt sich dann ein Spektrum für die Geschwindigkeit 8 und ein Spektrum für die Beschleunigung 9. Gezeigt ist ferner die BPFO (Ball Pass Frequency Outer Race / Kugellager Außenring Frequenz) mit einem Maximum und das Zweifache dieser Frequenz mit einem weiteren Maximum (2xBPFO). In einer Darstellung realer Werte für Spektren im Bereich 14 ergeben sich unterschiedliche Muster bei unterschiedlichen Geschwindigkeiten (speed) und unterschiedlichen Momenten (torque).

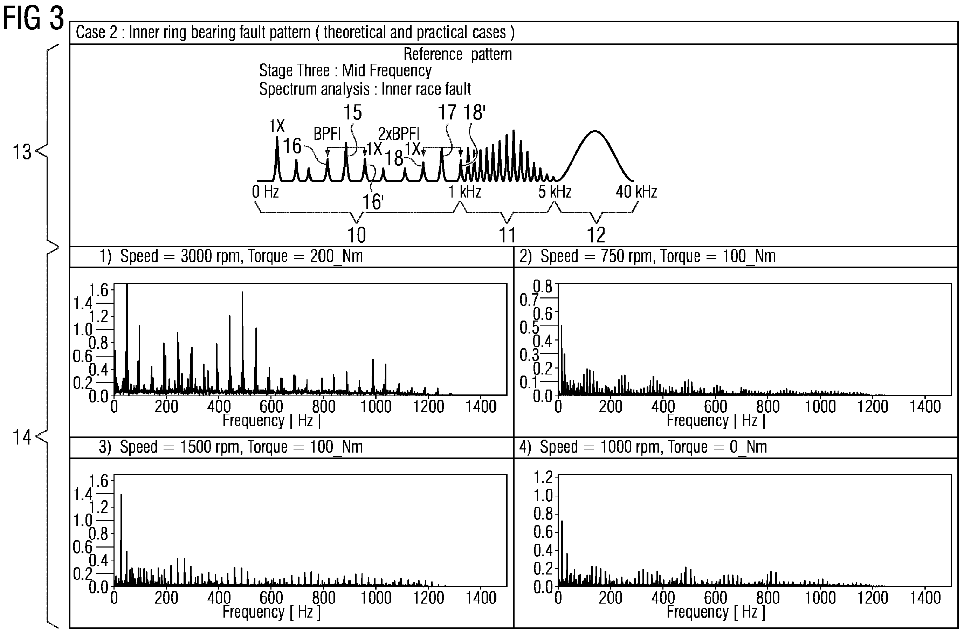

Die Darstellung nach Figur 3 zeigt einen zweiten Fall mit einer Spektralanalyse. Figur 3 zeigt Spektren und Fehlermuster bei einem BPFI (Ball Pass Frequency Inner Race / Kugellager Innenring Frequenz). Gezeigt sind Hauptmaxima 15 und 17, sowie deren zugehörige Seitenbänder 16 und 16' für das Hauptmaximum BPFI und Seitenbänder 18 und 18' für das Hauptmaximum 2 mal BPFI. So wird ersichtlich das auf Basis eines Musters einer Frequenzanalyse auf bestimmte Fehler bzw. Fehlerquellen geschlossen werden kann.

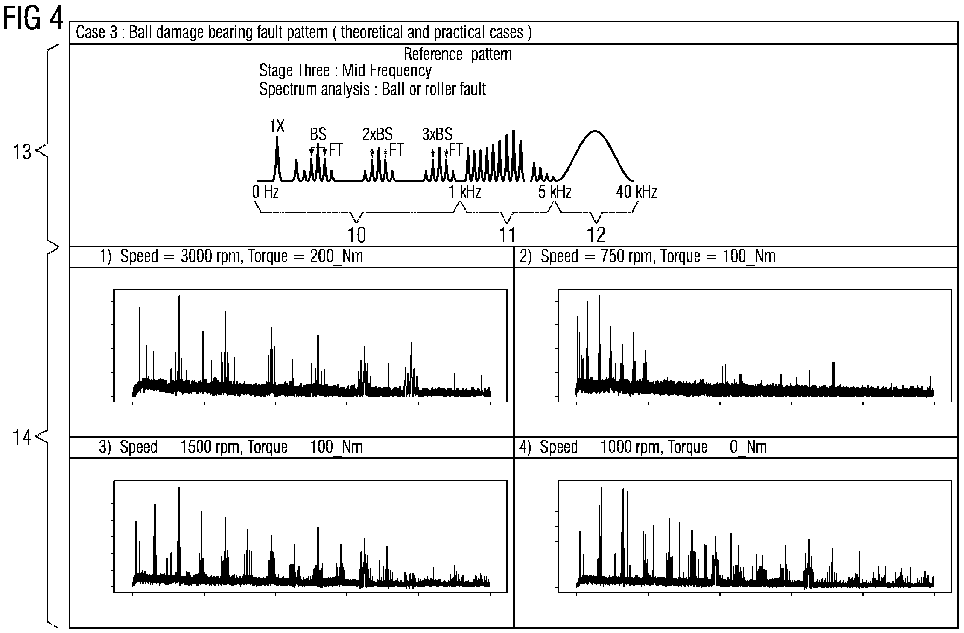

Die Darstellung nach Figur 4 zeigt einen dritten Fall mit einer Spektralanalyse. Dieser dritte Fall betrifft den ball spin (BS), d.h. insbesondere die BSF (Ball Spin Frequency). Es kann also ein Fehler bei Kugeln eines Kugellagers vorliegen. Es ist erkennbar, dass hier durch die Seitenbänder (FT) das Muster der Maxima eine zusätzliche Ausprägung erfahren hat.

Durch eine spektrale Mustererkennung kann folglich eine Detektion eines Fehlers erfolgen. Die spektrale Mustererkennung basiert zum einen auf dem Erkennen von Maxima, insbesondere Hauptmaxima und dem Erkennen von neben Maxima der Seitenbänder der Hauptmaxima. Aus der Analyse der Hauptmaxima und neben Maxima können Fehler eines Lagers einer Klasse von Fehlern zugeordnet werden. Dies sind insbesondere Fehler im Bereich des Außenrings, Fehler im Bereich des Innenrings und/oder Fehler bei den Kugeln eines Kugellagers. Dies ist entsprechend auch auf Tonnen Lager oder Nadellager oder dergleichen anwendbar.

## Patentansprüche

1. Verfahren zur Fehlererkennung bei einem Antrieb (1), wobei ein normiertes Geschwindigkeitsspektrum (8) ermittelt wird, wobei ein erster Spitzenwert erkannt wird und wobei ein erstes Muster erkannt wird.

2. Verfahren nach Anspruch 1, wobei ein normiertes Beschleunigungsspektrum (9) ermittelt wird, wobei ein zweiter Spitzenwert erkannt wird und wobei ein zweites Muster erkannt wird.

3. Verfahren nach Anspruch 1 oder 2, wobei eine Schwingungsanalyse im Frequenzbereich anhand des normierten Geschwindigkeitsspektrums durchgeführt wird.

4. Verfahren nach einem der Ansprüche 1 bis 3, wobei eine Schwingungsanalyse im Frequenzbereich anhand eines Spektrums der normierten Beschleunigungshüllkurve durchgeführt wird.

5. Verfahren nach einem der Ansprüche 1 bis 4, wobei eine statistische Inferenz auf eine Zeitbereichsstatistik wie Skewness und Kurtosis angewandt wird.

6. Verfahren nach einem der Ansprüche 1 bis 5, wobei zum Erkennen eines Musters eine künstliche Intelligenz verwendet wird.

7. Verfahren nach einem der Ansprüche 1 bis 6, wobei zur Fehlererkennung ein Betriebszustand des Antriebs verwendet wird.

8. Computerprogrammprodukt, das computerausführbare Programmmittel aufweist und bei Ausführung auf einer Rechnereinrichtung mit Prozessormitteln und Datenspeichermitteln geeignet ist, ein Verfahren nach einem der Ansprüche 1 bis 7 durchzuführen.
